# EUROPÄISCHE PATENTSCHRIFT

(11) **EP 2 432 979 B1**
(45) Veröffentlichungstag und Bekanntmachung des Hinweises auf die Patenterteilung: **01.05.2013**
(21) Anmeldenummer: 10723514.5
(22) Anmeldetag: 19.05.2010
(51) Int. Cl.: F02D 9/10, F02D 9/02, F02D 9/08, F02B 33/44, F02B 37/04, F02B 21/00, F02M 35/10, F02D 23/02

(54) **GEHÄUSE EINER FRISCHGASVERSORGUNGSEINRICHTUNG FÜR EINE VERBRENNUNGSMASCHINE UND FRISCHGASVERSORGUNGSEINRICHTUNG**
HOUSING OF A FRESH GAS SUPPLY DEVICE FOR AN INTERNAL COMBUSTION ENGINE AND FRESH GAS SUPPLY DEVICE
BOÎTIER D'UN DISPOSITIF D'ALIMENTATION EN GAZ FRAIS POUR UNE MACHINE À COMBUSTION INTERNE, AINSI QUE DISPOSITIF D'ALIMENTATION EN GAZ FRAIS

(30) Priorität: 20.05.2009 DE 102009022229
(43) Veröffentlichungstag der Anmeldung: 28.03.2012
(73) Patentinhaber: Knorr-Bremse Systeme für Nutzfahrzeuge GmbH, 80809 München (DE)
(72) Erfinder: BACURIN, Mario, 80538 München (DE)
(74) Vertreter: Mattusch, Gundula
(86) Internationale Anmeldenummer: PCT/EP2010/003057
(87) Internationale Veröffentlichungsnummer: WO 2010/133351

(56) Entgegenhaltungen:
- WO-A1-2006/089779
- DE-A1-102006 008 783
- DE-U1-202004 006 242
- US-A1- 2007 144 483

## Beschreibung

Die Erfindung betrifft ein Gehäuse einer Frischgasversorgungseinrichtung für eine Verbrennungsmaschine mit Abgasturbolader und eine entsprechende Frischgasversorgungseinrichtung.

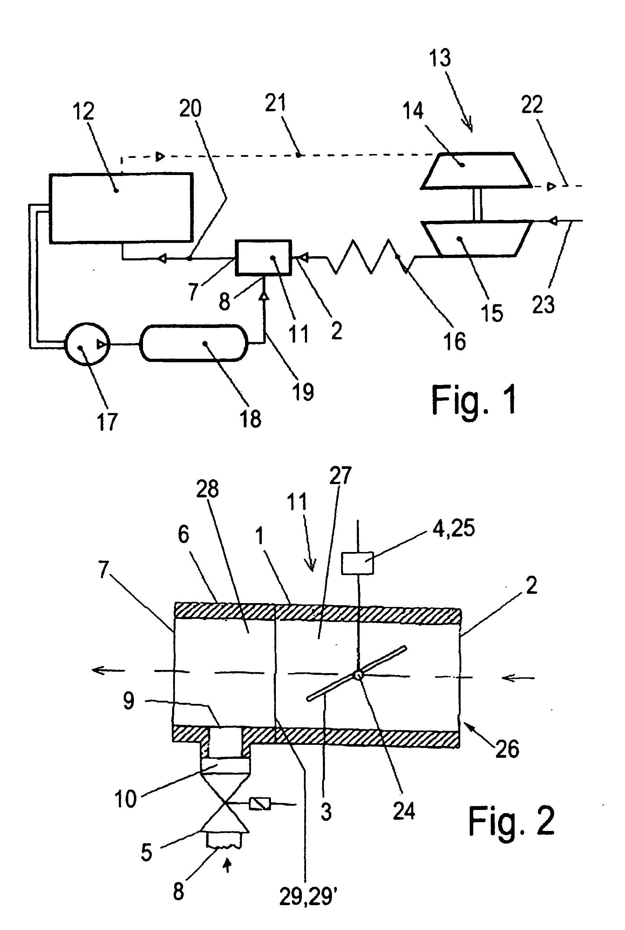

Verbrennungsmaschinen, wie zum Beispiel Dieselmotoren, sind meistens mit Abgasturboladern ausgerüstet. Fig. 1 zeigt in einer schematischen Darstellung eine Verbrennungsmaschine 12, deren Abgasleitung 21 mit einer Abgasturbine 14 eines Abgasturboladers 13 gekoppelt ist. Die Abgasturbine 14 ist mit einem Verdichter 3 gekoppelt, welcher Ansaugluft aus einem Frischlufteinlass 23 nach Durchlauf eines Ladeluftkühlers 16 zur Erhöhung eines Ansaugdrucks in einer Ansaugleitung 20 für die Verbrennungsmaschine 12 verdichtet. Dadurch wird zum Beispiel ein Beschleunigungsverhalten des Fahrzeugs mit der Verbrennungsmaschine 12 verbessert, und eine Reduzierung des Energieverbrauchs kann erreicht werden. Zur Verringerung des so genannten "Turbolochs", bei welchem die Verbrennungsmaschine beim Gasgeben mit einer Drehzahlerhöhung erst nach einer bestimmten Verzögerungszeit reagiert, wird Druckluft, zum Beispiel aus einem von einem von der Verbrennungsmaschine 12 angetriebenen (doppelte Striche) Kompressor 17 gespeisten Druckluftspeicher 18, durch eine Druckluftleitung 19 gesteuert in die Ansaugleitung 20 der Verbrennungsmaschine 12 eingeleitet, um bei erhöhtem Ansaugluftbedarf der Verbrennungsmaschine 12 diesen zu decken. Dies erfolgt mittels einer Frischgasversorgungseinrichtung 11, welche zwischen dem Verdichter 15 des Turboladers 13 bzw. dem in Strömungsrichtung nachgeschalteten Ladeluftkühler 16 und der Ansaugleitung 20 angeordnet ist.

Die Frischgasversorgungseinrichtung 11 ist mit einem Ladelufteinlass 2 mit dem Ladeluftkühler 16, mit einem Auslass 7 mit der Ansaugleitung 20 und mit einem Drucklufteinlass 8 über die Druckluftleitung 19 mit dem Druckluftspeicher 18 verbunden. In dem Dokument WO 2006/089779 A 1 ist eine solche Frischgasversorgungseinrichtung 11 ausführlich beschrieben.

DE 10 2006 008 783 A 1 beschreibt eine Frischgasversorgungseinrichtung für eine turboaufgeladene Kolbenbrennkraftmaschine mit Frischgasleitungsmitteln. Die Frischgasleitungsmittel umfassen einen in einen rohrförmigen Innenraum seitlich einmündenden Druckluftanschluss mit einer Mengenregelvorrichtung, sowie eine im Innenraum angeordnete verstellbare Klappe zur Durchflussregulierung.

Eine derartige Frischgasversorgungseinrichtung weist eine nachteilig hohe Teilezahl und eine entsprechend lange Zusammenbau- und Installationszeit auf.

Es ist daher die Aufgabe der vorliegenden Erfindung, eine verbesserte Frischgasversorgungseinrichtung bereitzustellen.

Die Aufgabe wird durch ein Gehäuse einer Frischgasversorgungseinrichtung mit den Merkmalen des Anspruchs 1 sowie durch eine Frischgasversorgungseinrichtung mit den Merkmalen des Anspruchs 8 gelöst.

Damit wird eine einfache fertigungstechnische Umsetzung erreicht, wie zum Beispiel sowohl in einer Ausführung als Gussrohteil als auch bei der mechanischen Bearbeitung desselben.

Durch ein geteiltes Gehäuse, das aus einem Gehäusehauptteil und einem Gehäusedeckel besteht, ist ein einfacher Zusammenbau ermöglicht.

Das Gehäusehauptteil und der Gehäusedeckel sind bevorzugweise mit Trennflächen aneinander entfernbar befestigbar sind, wobei die Trennflächen in einer Ebene verlaufen, die im Wesentlichen quer zur Längsachse des Frischgasverbindungsabschnitts liegt. Dadurch ist es möglich, die beiden Gehäuseteile in einfacher Weise mit Funktionsbauteilen zu bestücken.

Dabei weist das Gehäusehauptteil den mit dem Frischgasverbindungsabschnitt kommunizierenden Ladelufteinlass auf, und der Gehäusedeckel besitzt den mit dem Frischgasverbindungsabschnitt verbundenen Luftauslass. Es ist somit vorteilhaft einfach, ein Klappenelement, für dessen Einbau das Gehäusehauptteil vorgesehen ist, in den Frischgasleitungsabschnitt einzubauen. Dazu ist das Klappenelement zum Beispiel in der Nähe der Trennstelle der Gehäuseteile angeordnet, was einen Einbau erheblich beschleunigt und vereinfacht.

Durch eine Zusammenfassung verschiedener Funktionen in einem Gehäuseteil ergibt sich eine vorteilhafte Reduzierung von Bauteilen.

So weist der Gehäusedeckel zumindest einen Drucklufteinlass zum Anschluss einer Druckluftleitung auf, wobei der zumindest eine Drucklufteinlass mit dem Luftauslass über einen Auslass kommuniziert. Es ist dabei vorgesehen, dass das Gehäuse mit einer Aufnahmeausnehmung zum Einbau zumindest einer Mengenregeleinrichtung zwischen dem zumindest einen Drucklufteinlass und dem Auslass ausgebildet ist.

Besonders vorteilhaft ist es, wenn die Aufnahmeausnehmung in zumindest eine Trennfläche zwischen dem Gehäusehauptteil und dem Gehäusedeckel eingeformt ist, da somit die Funktionsteile vor dem Aufbringen des Gehäusedeckels in diesen oder in die Trennfläche auf dem Gehäusehauptteil eingelegt werden können und durch das Anbringen des Gehäusedeckels fixiert werden.

In ähnlicher Weise ist vorgesehen, dass das Gehäuse mit einer Aufnahme zum Einbau zumindest eines Rückschlagventils zwischen dem zumindest einen Drucklufteinlass und dem Auslass ausgebildet ist. Auch hierbei kann diese Aufnahme in zumindest eine Trennfläche zwischen dem Gehäusehauptteil und dem Gehäusedeckel eingeformt sein, wodurch sich ein einfacher Zusammenbau und Aufbau ergeben.

Der Gehäusedeckel dient somit außerdem als Deckel für die Mengenregeleinrichtung und beinhaltet die Rückschlagventile, die dadurch keine zusätzlichen Gehäuse und/oder Halterungen erfordern.

Eine Frischgasversorgungseinrichtung weist das oben beschriebene Gehäuse auf.

Die Erfindung wird nun anhand von Ausführungsbeispielen mit Bezug auf die beigefügten Zeichnungen näher erläutert. Hierbei zeigt:
- Fig. 1: eine schematische Darstellung einer Verbrennungsmaschine mit einem Abgasturbolader und einer Frischgasversorgungseinrichtung;
- Fig. 2: eine schematische Darstellung einer erfindungsgemäßen Frischgasversorgungseinrichtung; und
- Fig. 3: eine perspektivische Darstellung eines Ausführungsbeispiels der erfindungsgemäßen Frischgasversorgungseinrichtung in einer teilweise zusammengebauten Stellung.

Gleiche Bauelemente bzw. Funktionseinheiten mit gleicher Funktion sind mit gleichen Bezugszeichen in den Figuren gekennzeichnet.

Fig. 1 ist bereits oben beschrieben.

In Fig. 2 ist eine schematische Darstellung eines ersten Ausführungsbeispiels einer erfindungsgemäßen Frischgasversorgungseinrichtung 11.

Die Frischgasversorgungseinrichtung 11 weist ein Gehäuse auf, welches aus einem Gehäusehauptteil 1 und einem daran angebrachten Gehäusedeckel 6 besteht. Die beiden Gehäuseteile sind an einer Trennfläche 29, 29' miteinander verbunden. Diese Trennflächen 29, 29' liegen in diesem Beispiel in einer Ebene, die quer zur Längsachse eines Frischgasleitungsabschnitts 26 verläuft.

Das Gehäusehauptteil 1 ist mit dem in der Fig. 2 rechts angeordneten Ladelufteinlass 2 versehen. Die von dem Verdichter 15 des Abgasturboladers 13 verdichtete Ladeluft strömt in Pfeilrichtung in den Ladelufteinlass 2 hinein und aus einem Luftauslass 7 heraus.

An den Ladelufteinlass 2 schließt sich der Frischgasversorgungsabschnitt 26 an, welcher sich weiter durch den Gehäusedeckel 6 zu einem Luftauslass 7 erstreckt, der an die Ansaugleitung 20 der Verbrennungsmaschine 12 (siehe Fig. 1) angeschlossen ist. Der Frischgasleitungsabschnitt 26 besteht aus einem Einlassabschnitt 27 innerhalb des Gehäusehauptteils 1 und einem sich daran in Längsrichtung des Frischgasleitungsabschnitts 26 anschließenden Auslassabschnitt 28 innerhalb des Gehäusedeckels 6.

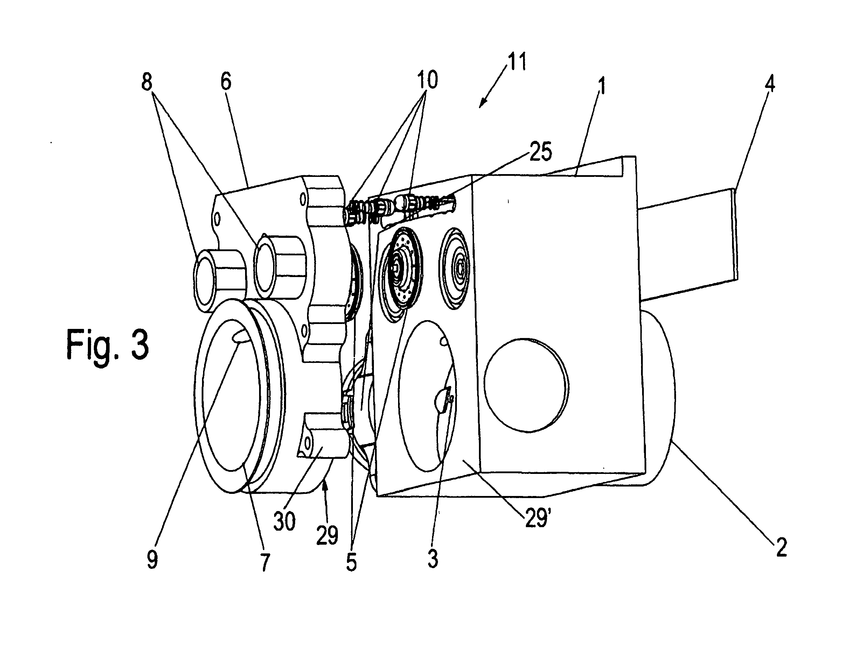

In dem Einlassabschnitt 26 befindet sich ein Klappenelement 3 an, welches um eine Klappenachse 24 in der Nähe der Trennflächen 29, 29' (siehe insbesondere Fig. 3) verschwenkbar angeordnet ist. Das Klappenelement 3 ist in diesem Beispiel mit einer Stelleinrichtung 25 verbunden. Die Stelleinrichtung 25 wird von einer Steuereinrichtung 4 gesteuert.

Nahe am Luftauslass 7 in dem Auslassabschnitt 28 ist ein Auslass 9 angeordnet. Der Auslass 9 steht mit einer Mengenregeleinrichtung 5 über Rückschlagventil 10 in Verbindung. Die Mengenregeleinrichtung 5 ist nur schematisch dargestellt. Die Mengenregeleinrichtung 5 ist über einen Drucklufteinlass 8 mit einer Druckluftleitung 19 (siehe Fig. 1) verbunden. Die Mengenregeleinrichtung 5 ist in dieser Ausführung auch mit der Steuereinrichtung 4 zur Steuerung verbunden. Die Mengenregeleinrichtung 5 kann eine geschlossene Stellung und beliebig viele geöffnete Stellungen aufweisen.

Bei einer Drehmomentanforderung mit hohem Luftbedarf kann der Abgasturbolader 13 diese Luft nicht sofort liefern. Dann wird zusätzlich Druckluft über die Mengenregeleinrichtung 5 über das Rückschlagventil 10 durch den Auslass 9 in den Auslassabschnitt 28 und somit durch den Luftauslass 7 in die Ansaugleitung 20 (siehe Fig. 1) eingeblasen.

Das Rückschlagventil 10 dient zur mechanischen Absicherung bei Druckabfall am Drucklufteinlass 8, um ein Ausströmen von Ladeluft aus dem Auslassabschnitt 28 zu verhindern.

Beim Einblasen von Druckluft in den Auslassabschnitt 28 wird zuvor das Klappenelement 3 in eine Stellung um die Klappenachse 24 so verschwenkt, dass der Einlassabschnitt 27 verschlossen ist, damit die zugeführte Druckluft aus dem Auslass 9 gerichtet in den Luftauslass 7 und nicht in den Verdichter 15 strömt.

Dadurch, dass das Klappenelement 3 verschlossen ist, wird der Ladeluftdruck des Abgasturboladers 13, der durch die der Verbrennungsmaschine 12 zugeführte zusätzliche Druckluft einen entsprechenden Abgasstrom erhält und schneller beschleunigt, auch schneller erhöht. Hat der Ladeluftdruck einen bestimmten Wert erreicht, wird die Mengenregeleinrichtung 5 in nicht näher beschriebener Weise geschlossen und das Klappenelement 3 wieder geöffnet.

Fig. 3 illustriert eine perspektivische Darstellung eines Ausführungsbeispiels der erfindungsgemäßen Frischgasversorgungseinrichtung 11 in einer teilweise zusammengebauten Stellung.

Das Gehäusehauptteil 1 ist in etwa würfelförmig gestaltet und weist an seiner in der Figur 3 rechts liegenden hinteren Seite den Ladelufteinlass 2 auf, an den sich der Einlassabschnitt 27 zylinderförmig anschließt (siehe Fig. 2), sich durch das Gehäusehauptteil 1 in der unteren Hälfte hindurch erstreckt und an der gegenüberliegenden Seite an einer Trennfläche 29' austritt. In der Nähe der Trennfläche 29' ist das Klappenelement 3 angeordnet, welches mit der Stelleinrichtung 25 in Wirkverbindung steht. Die Stelleinrichtung 25 ist an einer Seitenfläche des Gehäusehauptteils 1 angeordnet und steht mit der Steuereinrichtung 4 in Verbindung, welche an der Rückseite des Gehäusehauptteils 1 oberhalb des Ladelufteinlasses 2 angebracht ist.

Der Trennfläche 29' liegt eine korrespondierende Trennfläche 29 des Gehäusedeckels 6 gegenüber. Der Gehäusedeckel 6 ist hier im noch nicht angebrachten Zustand gezeigt. Er weist den in Fig. 3 nach links weisenden Luftauslass 7 mit einem hier kurz gestalteten Auslassabschnitt 28 (siehe Fig. 2) auf, der bei angebrachtem Gehäusedeckel 6 den Einlassabschnitt 27 verlängert und mit diesem den Frischgasleitungsabschnitt 26 bildet.

Der Gehäusedeckel 6 ist hier über Befestigungsmittel, zum Beispiel Schrauben, mit dem Gehäusehauptteil 1 verbindbar, was durch eine hervorstehende Befestigungslasche 30 angedeutet ist.

Oberhalb des Luftauslasses 7 sind in diesem Beispiel zwei Drucklufteinlässe 8, die nebeneinander liegen, angeordnet. Sie sind mit Ausnehmungen in der Trennfläche 29' verbunden (hier nicht dargestellt, aber leicht vorstellbar), in welchen hier zwei Mengenregeleinrichtungen 5 aufgenommen sind. Die Mengenregeleinrichtungen 5 sind für die Aufnahme in Ausnehmungen vorgesehen, welche in der gegenüberliegenden Trennfläche 29 des Gehäusehauptteils 1 eingeformt sind. Weiterhin sind in den Trennflächen 29 und 29' oberhalb der Ausnehmungen für die Mengenregeleinrichtungen 5 Aufnahmen für Rückschlagventile 10 (siehe Fig. 2) vorgesehen. Diese und die Mengenregeleinrichtungen 5 sind bei aufgebrachtem Deckel in ihren jeweiligen Ausnehmungen gehalten und erfordern keine zusätzlichen Gehäuse. Ihre Ausnehmungen in der Trennfläche 29 des Gehäusehauptteils 1 sind hier nur Aufnahmen. Auf der gegenüberliegenden Seite der korrespondierenden Trennfläche 29' des Gehäusedeckels 6 sind ihre Aufnahmen zum Beispiel mit Ventilsitzen, wie leicht vorstellbar ist, versehen und mit den Drucklufteinlässen 8 verbunden. Weiterhin kommunizieren diese Ausnehmungen mit ihren Ausgängen über einen oder mehrere Auslässe 9 mit dem Luftauslass 7, in deren Innenwand sie einmünden. Anhand der schematischen Darstellung nach Fig. 2 sind diese inneren Leitungen und Verbindungen im Gehäusedeckel leicht vorstellbar.

Die Steuereinrichtung 4 steht weiterhin mit nicht dargestellten Drucksensoren im Einlassabschnitt 27 und im Auslassabschnitt 28 in Verbindung, wie es zum Beispiel in der WO 2006/089779 A1 beschrieben ist.

Die Erfindung ist nicht auf die oben beschriebenen Ausführungsbeispiele beschränkt. Sie ist im Rahmen der beigefügten Ansprüche modifizierbar.

Es ist zum Beispiel denkbar, dass mehr als zwei Drucklufteinlässe 8, mehr Mengenregeleinrichtungen 5 und mehr Rückschlagventile 10 als dargestellt vorgesehen sein können.

Auch die Form des Gehäuses kann unterschiedlich sein, wie zum Beispiel zylinderförmig.

### Bezugszeichenliste

- 1: Gehäusehauptteil
- 2: Ladelufteinlass
- 3: Klappenelement
- 4: Steuereinrichtung
- 5: Mengenregeleinrichtung
- 6: Gehäusedeckel
- 7: Luftauslass
- 8: Drucklufteinlass
- 9: Auslass
- 10: Rückschlagventil
- 11: Frischluftversorgungseinrichtung
- 12: Verbrennungsmaschine
- 13: Abgasturbolader
- 14: Abgasturbine
- 15: Verdichter
- 16: Ladeluftkühler
- 17: Kompressor
- 18: Druckluftspeicher
- 19: Druckluftleitung
- 20: Ansaugleitung
- 21: Abgasleitung
- 22: Abgasauslass
- 23: Frischlufteinlass
- 24: Klappenachse
- 25: Stelleinrichtung
- 26: Frischgasleitungsabschnitt
- 27: Einlassabschnitt
- 28: Auslassabschnitt
- 29, 29': Trennfläche

## Patentansprüche

1. Gehäuse einer Frischgasversorgungseinrichtung (11) für eine Verbrennungsmaschine (12) mit Abgasturbolader (13), mit einem einen Ladelufteinlass (2) und einen Luftauslass (7) verbindenden Frischgasverbindungsabschnitts (26), wobei das Gehäuse ein Gehäusehauptteil (1) und einen daran befestigten, entfernbaren Gehäusedeckel (6) aufweist, wobei der Gehäusedeckel (6) zumindest einen Drucklufteinlass (8) zum Anschluss einer Druckluftleitung (19) aufweist, wobei der zumindest eine Drucklufteinlass (8) mit dem Luftauslass (7) über einen Auslass (9) kommuniziert, **dadurch gekennzeichnet, dass** das Gehäuse mit einer Aufnahmeausnehmung zum Einbau zumindest einer Mengenregeleinrichtung (5) zwischen dem zumindest einen Drucklufteinlass (8) und dem Auslass (9) ausgebildet ist.

2. Gehäuse nach Anspruch 1, **dadurch gekennzeichnet, dass** das Gehäusehauptteil (1) und der Gehäusedeckel (6) mit Trennflächen (29, 29') aneinander entfernbar befestigbar sind, wobei die Trennflächen (29, 29') in einer Ebene verlaufen, die im Wesentlichen quer zur Längsachse des Frischgasverbindungsabschnitts (26) liegt.

3. Gehäuse nach Anspruch 1 oder 2, **dadurch gekennzeichnet, dass** das Gehäusehauptteil (1) den mit dem Frischgasverbindungsabschnitt (26) kommunizierenden Ladelufteinlass (2) aufweist und der Gehäusedeckel (6) den mit dem Frischgasverbindungsabschnitt (26) verbundenen Luftauslass (7) aufweist.

4. Gehäuse nach einem der Ansprüche 1 bis 3, **dadurch gekennzeichnet, dass** das Gehäusehauptteil (1) für den Einbau eines Klappenelementes (3) in dem Frischgasverbindungsabschnitt (26) vorgesehen ist.

5. Gehäuse nach Anspruch 1, **dadurch gekennzeichnet, dass** die Aufnahmeausnehmung in zumindest eine Trennfläche (29, 29') zwischen dem Gehäusehauptteil (1) und dem Gehäusedeckel (6) eingeformt ist.

6. Gehäuse nach Anspruch 1 oder 5, **dadurch gekennzeichnet, dass** das Gehäuse mit einer Aufnahme zum Einbau zumindest eines Rückschlagventils (10) zwischen dem zumindest einen Drucklufteinlass (8) und dem Auslass (9) ausgebildet ist.

7. Gehäuse nach Anspruch 6, **dadurch gekennzeichnet, dass** die Aufnahme in zumindest eine Trennfläche (29, 29') zwischen dem Gehäusehauptteil (1) und dem Gehäusedeckel (6) eingeformt ist.

8. Frischgasversorgungseinrichtung (11) mit einem Gehäuse für eine Verbrennungsmaschine (12) mit Abgasturbolader (13), **dadurch gekennzeichnet, dass** das Gehäuse als Gehäuse nach einem der Ansprüche 1 bis 7 ausgebildet ist.

9. Frischgasversorgungseinrichtung (11) nach Anspruch 8, **dadurch gekennzeichnet, dass** das Klappenelement um eine Drehachse (24) verschwenkbar ist.

## Claims

1. Housing of a fresh gas supply device (11) for an internal combustion engine (12), comprising an exhaust gas turbo charger (13), a fresh gas connecting section (26) connecting a charge air inlet (2) and an air outlet (7), with the housing including a main housing part (1) and a removable housing cover (6) fastened to it, with said housing cover (6) including at least one compressed-air inlet (8) for connection of a compressed-air conduit (19), wherein said at least one compressed-air inlet (8) communicates with said air outlet (7) via an outlet (9), **characterised in that** the housing is configured with a receiving recess for mounting at least one volume control means (5) between said at least one compressed-air inlet (8) and said outlet (9).

2. Housing according to Claim 1, **characterised in that** said main housing part (1) and said housing cover (6) are adapted for being removably fastened to each other by a separation plane (29, 29'), with said separation planes (29, 29') extending in a plane that is substantially located transversely with respect to the longitudinal axis of said fresh gas connecting section (26).

3. Housing according to Claim 1 or 2, **characterised in that** said main housing part (1) includes said charge air inlet (2) communicating with said fresh gas connecting section (26) and that said housing cover (6) includes said air outlet (7) connected to said fresh gas connecting section (26).

4. Housing according to any of the Claims 1 to 3, **characterised in that** said main housing part (1) is provided for mounting a flap element (3) into said fresh gas connecting section (26).

5. Housing according to Claim 1, **characterised in that** said receiving recess is moulded in at least one separation plane (29, 29') between said main housing part (1) and said housing cover (6).

6. Housing according to Claim 1 or 5, **characterised in that** the housing is configured to have a receiving part for mounting at least one non-return valve (10) between said at least compressed-air inlet (8) and said outlet (9).

7. Housing according to Claim 6, **characterised in that** said receiving part is moulded in at least one separation plane (29, 29') between the main housing part (1) and said housing cover (6).

8. Fresh gas supply device (11) including a housing for an internal combustion engine (12) with an exhaust gas turbo charger (13), **characterised in that** said housing is configured as a housing according to any of the Claims 1 to 7.

9. Fresh gas supply device (11) according to Claim 8, **characterised in that** said flap element is pivotable about an axis of rotation (24).

## Revendications

1. Enveloppe d'un dispositif (11) d'alimentation en gaz frais pour un moteur (12) à combustion interne ayant un turbocompresseur (13) des gaz d'échappement, un tronçon (26) de liaison pour du gaz frais mettant en communication une entrée (2) d'air de suralimentation et une sortie (7) d'air, l'enveloppe ayant une partie (1) principale d'enveloppe et un couvercle (6) d'enveloppe, qui y est fixé et qui peut en être retiré, le couvercle (6) de l'enveloppe ayant au moins une entrée (8) d'air comprimé pour le raccordement d'un conduit (19) pour de l'air comprimé, la au moins une entrée (8) d'air comprimé communiquant avec la sortie (7) d'air par une sortie (9), **caractérisée en ce que** l'enveloppe est constituée en ayant un évidement de réception pour le montage d'au moins un dispositif (5) de réglage du débit entre la au moins une entrée (8) d'air comprimé et la sortie (9).

2. Enveloppe suivant la revendication 1, **caractérisée en ce que** la partie (1) principale de l'enveloppe et le couvercle (6) de l'enveloppe peuvent être fixés par des surfaces (29, 29') de joint en pouvant être éloignés l'un de l'autre, les surfaces (29, 29') de joint s'étendant dans un plan qui est sensiblement transversal à l'axe longitudinal du tronçon (26) de liaison pour du gaz frais.

3. Enveloppe suivant la revendication 1 ou 2, **caractérisée en ce que** la partie (1) principale de l'enveloppe a l'entrée (2) d'air de suralimentation communiquant avec le tronçon (26) de liaison pour du gaz frais et le couvercle (6) de l'enveloppe a la sortie (7) d'air reliée au tronçon (26) de liaison pour du gaz frais.

4. Enveloppe suivant l'une des revendications 1 à 3, **caractérisée en ce que** la partie (1) principale de l'enveloppe est prévue pour le montage d'un élément (3) à volet dans le tronçon (26) de liaison pour du gaz frais.

5. Enveloppe suivant la revendication 1, **caractérisée en ce que** l'évidement de réception est formé dans au moins une surface (29, 29') de joint entre la partie (1) principale de l'enveloppe et le couvercle (7) de l'enveloppe.

6. Enveloppe suivant la revendication 1 ou 5, **caractérisée en ce que** l'enveloppe est constituée en ayant un logement pour le montage d'au moins un clapet antiretour (10) entre la au moins une entrée (8) d'air comprimé et la sortie (9).

7. Enveloppe suivant la revendication 6, **caractérisée en ce que** le logement est ménagé dans au moins une surface (29, 29') de joint entre la partie (1) principale de l'enveloppe et le couvercle (6) de l'enveloppe.

8. Dispositif (11) d'alimentation en gaz frais, comprenant une enveloppe pour un moteur (2) à combustion interne, ayant un turbocompresseur (13) des gaz d'échappement, **caractérisé en ce que** l'enveloppe est constituée sous la forme d'une enveloppe suivant l'une des revendications 1 à 7.

9. Dispositif (11) d'alimentation en gaz frais suivant la revendication 8, **caractérisé en ce que** l'élément formant volet peut pivoter autour d'un axe (24) de rotation.
